(19) Europäisches Patentamt
European Patent Office
Office européen des brevets

(11) EP 1 958 020 B1

(12) **EUROPÄISCHE PATENTSCHRIFT**

(45) Veröffentlichungstag und Bekanntmachung des Hinweises auf die Patenterteilung:
**25.11.2009 Patentblatt 2009/48**

(21) Anmeldenummer: **05816280.1**

(22) Anmeldetag: **02.12.2005**

(51) Int Cl.:
***G02F 1/13357*** (2006.01) ***C09J 7/02*** (2006.01)

(86) Internationale Anmeldenummer:
**PCT/EP2005/056420**

(87) Internationale Veröffentlichungsnummer:
**WO 2007/062691 (07.06.2007 Gazette 2007/23)**

(54) **DOPPELSEITIGE HAFTKLEBEBÄNDER ZUR HERSTELLUNG VON FLÜSSIGKRISTALLANZEIGEN MIT LICHTREFLEKTIERENDEN UND -ABSORBIERENDEN EIGENSCHAFTEN**

DOUBLE-SIDED PRESSURE-SENSITIVE ADHESIVE TAPES FOR PRODUCING LIQUID CRYSTAL DISPLAYS HAVING LIGHT-REFLECTING AND ABSORBING PROPERTIES

RUBANS AUTOADHESIFS DOUBLE FACE A PROPRIETES DE REFLEXION ET D'ABSORPTION DE LA LUMIERE POUR LA FABRICATION D'ECRANS A CRISTAUX LIQUIDES

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**20.08.2008 Patentblatt 2008/34**

(73) Patentinhaber: **TESA SE**
**20253 Hamburg (DE)**

(72) Erfinder:
- **HUSEMANN, Marc**
  **22605 Hamburg (DE)**
- **MEYER, Claus**
  **21079 Hamburg (DE)**
- **WEETS, Matthias**
  **22527 Hamburg (DE)**
- **DALMIS, Gabriel**
  **22459 Hamburg (DE)**

(56) Entgegenhaltungen:
**WO-A-2005/019367 DE-A1- 10 243 215**
**US-A1- 2004 076 768**

- **PATENT ABSTRACTS OF JAPAN Bd. 2002, Nr. 05, 3. Mai 2002 (2002-05-03) -& JP 2002 023663 A (COSMO TEC:KK), 23. Januar 2002 (2002-01-23)**
- **PATENT ABSTRACTS OF JAPAN Bd. 2003, Nr. 04, 2. April 2003 (2003-04-02) -& JP 2002 350612 A (DAINIPPON INK & CHEM INC), 4. Dezember 2002 (2002-12-04) in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft doppelseitige Haftklebebänder mit mehrschichtigen Trägeraufbauten, mit mehrschichtigen Haftklebemassenaufbauten und mit lichtreflektierenden und lichtabsorbierenden Eigenschaften zur Herstellung von Flüssigkristall-Datenanzeigen (Liquid Crystal Displays, LCDs).

Haftklebebänder sind im Zeitalter der Industrialisierung weitverbreitete Verarbeitungshilfsmittel. Insbesondere für den Einsatz in der Computerindustrie werden an Haftklebebänder sehr hohe Anforderungen gestellt. Neben einem geringen Ausgasungsverhalten sollten die Haftklebebänder in einem weiten Temperaturbereich einsetzbar sein und bestimmte optische Eigenschaften erfüllen.

Ein Einsatzgebiet sind optische Flüssigkristall-Datenanzeigen (Liquid Crystal Displays, LCDs), die für Computer, Fernsehgeräte, Laptops, PDA's, Mobiltelefone, Digitalkameras etc. benötigt werden. Fig. 1 zeigt das Konzept für ein doppelseitiges Klebeband mit einer schwarzen Schicht zur Absorption und einer Schicht zur Reflexion gemäß dem Stande der Technik; dabei bedeuten:

1 LCD-Glas
2 doppelseitiges schwarz-weißes Klebeband
3 Haftklebemasse
4 Lichtquelle (LED)
5 Lichtstrahlen
6 doppelseitiges Klebeband
7 Lichtleiter

8 Reflektionsfolie
9 LCD-Gehäuse
10 schwarze absorbierende Klebebandseite
11 reflektierende Seite
12 sichtbarer Bereich
13 "blinder" Bereich

Zur Herstellung von LC-Displays werden Leuchtdioden (Light Emitting Diode, LED) als Lichtquelle mit dem LCD Modul verklebt. Hierfür werden in der Regel schwarze doppelseitige Haftklebebänder eingesetzt. Durch die schwarze Einfärbung soll erreicht werden, dass im Bereich des doppelseitigen Haftklebebandes kein Licht von innen nach außen und umgekehrt dringt.

Es existieren bereits viele Konzepte, solch eine Schwarzfärbung zu erreichen. Auf der anderen Seite möchte man die Lichteffizienz des rückseitigen Lichtmoduls erhöhen, so dass bevorzugt doppelseitige Klebebänder eingesetzt werden, die auf einer Seite schwarz sind (lichtabsorbierend) und auf der anderen Seite lichtreflektierend.

Zur Herstellung der schwarzen Seite existieren viele Konzepte.

Ein Konzept zur Herstellung von schwarzen doppelseitigen Haftklebebändern besteht in der Einfärbung der Trägermaterials. In der Elektronik-Industrie werden sehr bevorzugt doppelseitige Haftklebebänder mit Polyesterfilm-Trägern (PET) eingesetzt, da diese sich sehr gut stanzen lassen. Die PET-Träger kann man ebenfalls mit Ruß oder schwarzen Farbpigmenten einfärben, um eine Absorption des Lichtes zu erreichen. Der Nachteil dieses bestehenden Konzeptes ist die geringe Absorption des Lichtes. In sehr dünnen Trägerschichten lassen sich nur eine relativ geringe Anzahl Ruß- oder anderer schwarzer Pigmentpartikel einbringen mit der Folge, dass keine vollständige Absorption des Lichtes erreicht wird. Mit dem Auge und auch mit intensiveren Lichtquellen (Lichtstärke größer 600 Candela) kann dann die mangelnde Absorption ermittelt werden.

Bei der Entwicklung von LC-Displays entwickelt sich ein Trend. Zum einen sollen die LC-Displays leichter und sowie flacher werden und es besteht ein stark steigender Bedarf für immer größere Displays mit immer höherer Auflösung. Aus diesem Grund wurde das Design der Displays geändert, und die Lichtquelle rückt dementsprechend immer näher an das LCD-Panel, mit der Konsequenz, dass die Gefahr steigt, dass immer mehr Licht von außen in die Randzone des LCD-Panels eindringt ("blind area") (vgl. Figur 1). Mit dieser Entwicklung steigen auch die Anforderungen an die Abschattungseigenschaften (black out Eigenschaften) des doppelseitigen Klebebandes und es besteht somit der Bedarf nach neuen Konzepten für Klebebänder.

Auf der anderen Seite soll weiterhin das doppelseitige Klebeband reflektierend sein und aber gleichzeitig auch hohe lichtabsorbierende Eigenschaften aufweisen.

In der JP 2002-350612 werden doppelseitige Klebebänder für LCD Panels mit lichtschützenden Eigenschaften beschrieben. Die Funktion wird durch eine Metallschicht, welche ein- oder beidseitig auf die Trägerfolie aufgetragen ist, erreicht, wobei die Trägerfolie zusätzlich noch eingefärbt sein kann. Durch die Metallisierung ist die Herstellung des Klebebandes relativ aufwendig, die Lichtreflektion sehr direkt, und das Klebeband selbst besitzt eine mangelhafte Planlage.

In der DE 102 43 215 werden doppelseitige Klebebänder für LC-Displays mit lichtabsorbierenden Eigenschaften auf der einen Seite und lichtreflektierenden Eigenschaften auf der anderen Seite beschrieben. In dieser Schrift werden schwarz/silberne doppelseitige Haftklebebänder beschrieben. Eine transparente oder gefärbte Trägerfolie wird einseitig metallisiert und auf der anderen Seite schwarz eingefärbt. Auf diesem Weg werden bereits gute reflektierende Eigenschaften, aber noch mangelhafte absorbierende Eigenschaften erreicht, da Fehlstellen, z.B. aus der Folie durch Antiblockmittel, nur überlackiert werden und somit das Licht an dieser Stelle (Pinholes) noch durchscheinen kann.

Die US 2004/076768 A und die WO 2005/019367 A, die beide alle Merkmale der Präambel von Anspruch 1 aufweisen, offenbaren jeweils doppelseitige Klebebänder zur Verklebung optischer Flüssigkristall-Datenanzeigen mit einer niedrigreflektierenden (bzw. absorbierenden) Seite und einer hochreflektierenden Seite, die jeweils zumindest eine dunkle (bzw. schwarze) Schicht in ihrem Aufbau aufweisen.

In der US 2004/076768 A ist auf der reflektierenden Seite eine weiße Haftklebeschicht worgesehen, in der WO 2005/019367 A eine transparente Haftklebeschicht mit einer darunter liegenden weißen Schicht.

Eine Weißfärbung der zweiten Haftklebeschicht auf anderen Seite des Klebebandes ist nicht nahe liegend, da diese Seite zur Lichtabsorption verwendet wird. Für Haftklebebänder mit beidseitiger Lichtreflexion gibt es in keiner der beiden Schriften einen Hinweis.

Für die Verklebung von LC-Displays bzw. zur deren Herstellung besteht somit weiterhin der Bedarf für doppelseitige Haftklebebänder, welche die oben beschriebenen und geforderten Eigenschaften aufweisen, aber keine schwarze Seite mehr zur Lichtabsorbtion aufweisen.

Aufgabe der Erfindung ist es daher, ein doppelseitiges Haftklebeband zur Verfügung zu stellen, welches die Anwesenheit von Pinholes vermeidet, welches in der Lage ist, Licht weitgehend vollständig zu absorbieren, und eine verbesserte Reflexion von Licht aufweist.

Gelöst wird die Aufgabe durch die erfindungsgemäßen Haftklebebänder, wie sie im Hauptanspruch dargestellt sind. Im Rahmen dieser Erfindung wurde überraschender Weise gefunden, dass ein für die Anwendungszwecke hervorragend geeignetes weißes Klebeband mit einer transparenten Folie und mit einer schwarzen Primerschicht hergestellt werden kann, in dem man beidseitig diese modifizierte Folie unmittelbar oder mittelbar mit einer weiß eingefärbten Haftklebemasse beschichtet.

Dementsprechend betrifft der Hauptanspruch ein Haftklebeband, insbesondere zur Herstellung oder Verklebung von optischen Flüssigkristall-Datenanzeigen (LCDs), aufweisend eine Ober- und eine Unterseite, mit lichtreflektierenden Eigenschaften auf der Ober- und Unterseite und gleichzeitig lichtabsorbierenden Eigenschaften durch den Trägeraufbau, weiterhin aufweisend eine Trägerfolie mit einer Ober- und einer Unterseite, wobei das Haftklebeband beidseitig mit einer weißen Haftklebeschicht ausgerüstet ist.

Insbesondere betrifft die Erfindung ein Haftklebeband, insbesondere zur Herstellung oder Verklebung von optischen Flüssigkristall-Datenanzeigen (LCDs),mit lichtreflektierenden und lichtabsorbierenden Eigenschaften, mit einer Ober- und einer Unterseite, weiterhin mit einer Trägerfolie, die ihrerseits eine Ober- und eine Unterseite hat, wobei das Haftklebeband beidseitig mit einer weiß eingefärbten Haftklebeschicht ausgerüstet ist, und wobei zumindest zwischen der Haftklebemasse auf der Unterseite des Haftklebebandes und der Trägerfolie eine dunkle Primerschicht vorgesehen ist.

Die Unteransprüche betreffen vorteilhafte Ausführungsformen des Erfindungsgegenstandes sowie die Verwendung der erfindungsgemäßen Haftklebebänder.

Im folgenden werden einige vorteilhafte Ausführungsformen des erfindungsgemäßen Klebebandes dargestellt, ohne sich durch die Wahl der Beispiele unnötig beschränken zu wollen.

Die Haftklebeschichten (b) und (b') auf den beiden Seiten des erfindungsgemäßen Haftklebebandes können jeweils identisch oder unterschiedlich sein, insbesondere was ihre Ausgestaltung (Schichtdicke und dergl.) und ihre chemische Zusammensetzung angeht. Erfindungsgemäß ist die Haftklebemasse auf beiden Seiten des Haftklebebandes weiß eingefärbt.

In einer ersten vorteilhaften Ausführungsform besteht das erfinderische Haftklebeband aus einer Trägerfolienschicht (a), einer schwarzen farbtragenden Primerschicht (c) und zwei weißen Haftklebeschichten (b) und (b'). Diese Ausführungsform ist in der Figur 2 dargestellt.

In einer weiteren bevorzugten Ausführungsform der Erfindung, wie sie die Figur 3 zeigt, besteht das doppelseitige Haftklebeband aus einer Trägerfolie (a), zwei schwarzen farbtragenden Primerschichten (c) und zwei weißen Haftklebeschichten (b) und (b').

Im folgenden wird die Erfindung weiter erläutert. Die angegebenen Grenzwerte sind als Inklusivwerte zu verstehen, also im angegebenen Grenzbereich enthalten.

Die Trägerfolie (a) ist bevorzugt zwischen 5 und 250 $\mu$m, mehr bevorzugt zwischen 8 und 50 $\mu$m, äußerst bevorzugt zwischen 12 und 36 $\mu$m dick und bevorzugt transparent. Die lichtabsorbierenden Eigenschaften können aber weiterhin positiv beeinflusst werden durch eine Einfärbung der Träger. Übliche Einfärbungen umfassen weiß und schwarz. Die Trägerfolie sind - in Abhängigkeit von der Dicke - semitransparent oder blickdicht.

Die Schichtdicke der Schichten (c) liegt bevorzugt zwischen 1 μm und 15 μm.
Die Haftklebemasseschichten (b) und (b') besitzen bevorzugt eine Dicke von jeweils zwischen 5 μm und 250 μm. Die einzelnen Schichten (a), (c), (b) und (b') können sich innerhalb des doppelseitigen Haftklebebandes im Hinblick auf die Schichtdicke unterscheiden können, so dass z.B. unterschiedlich dicke Haftklebemassenschichten (b) und (b') aufgetragen werden können, oder einzelne, mehrere oder auch alle Schichten können identisch gewählt werden.

Trägerfolie (a)

Als Folienträger können prinzipiell alle filmischen Polymerträger eingesetzt werden, insbesondere solche, die transparent sind. So lassen sich z.B. Polyethylen, Polypropylen, Polyimid, Polyester, Polyamid, Polymethacrylat, fluorierte Polymerfolien, etc. einsetzen. In einer besonders bevorzugten Ausführungsform werden Polyesterfolien eingesetzt, besonders bevorzugt PET-Folien (Polyethylenterephthalat). Die Folien können entspannt sein oder eine oder mehrere Vorzugsrichtungen aufweisen. Vorzugsrichtungen werden erzielt durch Streckung in einer oder in zwei Richtungen. Normalerweise werden für den Herstellprozess von Folien, beispielsweise PET-Folien, Antiblockmittel, wie z.B. Siliciumdioxid, Kieselkreide oder Kreide, Zeolithe, eingesetzt.
Antiblockmittel sollen das Zusammenbacken flächiger Kunstofffolien unter Druck und Temperatur zu Blöcken verhindern. Üblicherweise arbeitet man die Antiblockmittel in die Thermoplastenmischung ein. Die Partikel fungieren dann als Abstandshalter.
Solche Folien sind für die erfinderischen doppelseitigen Klebebänder vorteilhaft einsetzbar. Für die erfinderischen Haftklebebänder lassen sich aber auch Folien einsetzen, die keine Antiblockmittel oder nur zu einem sehr geringen Anteil enthalten. Ein Beispiel für eine solche Folien ist z.B. die Hostaphan™ 5000 Serie von Mitsubishi Polyester Film (PET 5211, PET 5333 PET 5210).
Weiterhin sind sehr dünne, beispielsweise 12 μm dicke, PET Folien zu bevorzugen, da diese sehr gute klebtechnische Eigenschaften für das doppelseitige Klebeband zu lassen, da hier die Folie sehr flexibel ist und sich gut den Oberflächenrauhigkeiten der zu verklebenden Substrate anpassen kann.
Zur Verbesserung der Verankerung der Lackschichten ist es sehr vorteilhaft, wenn die Folien vorbehandelt werden. Die Folien können geätzt sein (z.B. Trichloressigäure oder Trifluoressigsäure), mit Corona oder Plasma vorbehandelt sein oder mit einem Primer (z.B. Saran) ausgestattet sein.
Des Weiteren können vorteilhaft - insbesondere wenn ein transparentes oder semitransparentes Folienmaterial vorliegt - Farbpigmente oder farbtragende Partikel zum Folienmaterial hinzugegeben werden. So eignen sich z.B. Titandioxid und Bariumsulfat zur Weißfärbung. Die Pigmente oder Partikel sollten aber bevorzugt immer kleiner im Durchmesser sein als die finale Schichtdicke der Trägerfolie. Optimale Einfärbungen lassen sich mit 5 bis 40 Gew.-% Partikelanteilen, bezogen auf das Folienmaterial, erzielen.

Primerschicht (c)

Die Primerschicht (c) erfüllt die Funktion der Lichtabsorbtion. Daher muss in diesem Fall für das doppelseitige Haftklebeband die Transmission in einem Wellenlängenbereich von 300 - 800 nm bei < 0,5 % mehr bevorzugt bei < 0,1 %, äußerst bevorzugt bei < 0,01 % liegen.
In einer weiteren Funktion verbessert die Primerschicht (c) die Verankerung der Haftklebemasse (b) bzw. (b') auf der Trägerfolie (a).
In einer sehr bevorzugten Variante wird dies mit einer schwarzen Primerschicht erreicht. Primer können als 100 % Systeme, aus Lösung oder aus Dispersion beschichtet werden. In der Regel bestehen Primer aus einer haftvermittelnden Matrix, die besonders bevorzugt mit einer reaktiven Komponente abgemischt wird. Im Rahmen dieser Erfindung müssen schwarze Farbpigmente oder schwarze farbtragende Substanzen dem Primer beigemischt sein.
Als haftvermittelnde Matrix lassen sich beispielsweise Polyester, Polyurethane, Polyacrylate, Silikone und Polymethacrylate einsetzen. Als Reaktivkomponente können z.B. di- oder multifunktionelle Isocyanate, di- oder multifunktionelle Aziridine, di- oder multifunktionelle Hydrazine, di- oder multifunktionelle Oxazolidine und multifunktionelle aromatische Dicarbonsäureanhydride eingesetzt werden. Die reaktiven Komponenten werden derart gewählt, dass eine Reaktion mit der Haftklebemasse (b) und (b') stattfinden kann. Beispiele für multifunktionelle Aziridine sind Crosslinker CX-100™ der Fa. ICI, XAMA™ 7, XAMA™ 2, und XAMA™ 22Q der Firma Ichemco, und für multifunktionelle Isocyanate die Desmodur Serie der Fa Lanxess sowie Curing Agent W, W3, WS5, D, 100D, RF-AE der Fa. Ichemco. Bi- oder multifunktionelle Oxazolidine sind kommerziell erhältlich und dem Tradenamen EPOROS von Nippon Shokubai; Ebenso Hydrazine und aromatische Dicarbonsäureanhydride.
Zur Verdünnung der bi- oder multifunktionellen der Reaktivkomponenten werden bevorzugt z.B. wässrige Polyacrylat-Dispersion, wie z. B. Neocryl A-45™ der Fa. Zeneca, oder SK 1800 der Fa. Nippon Shokubai.
Die Dispersion bindet den Reaktiv-Primer ein und erleichtert somit die Handhabung der Beschichtung des Substrates via Ausstrich oder mit Hilfe der Transfer-Technik. Insbesondere für Primerdispersionen kann es von Vorteil sein, wenn

dem Fachmann bekannte Additive eingesetzt werden, z.B. zur Verbesserung der Beschichtbarkeit durch Verringerung des Aufschäumens oder Zusätze zur Verbesserung der Stabilität oder der Haltbarkeit von Dispersionen.
Zur Verdünnung der bi- oder multifunktionellen der Reaktivkomponenten werden in einer weiteren Variante lösungsmittel basierende haftvermittelnde Matrizes eingesetzt. Kommerzielle Beispiele hierfür sind z.B. Primer Unisol 11 der Fa. Ichemco, oder NX 350 und NX 380 der Fa. Nippon Shokubai.
In einer sehr zu bevorzugenden erfinderischen Variante werden als farbtragende Partikel Ruße hinzugesetzt, insbesondere vorteilhaft Pigmentruße. Der Anteil (bezogen auf das Polymer und bei Anwesenheit einer Reaktivkomponente auf das Polymer und die Reaktivkomponente) beträgt zwischen 2 und 30 Gew.-% Ruß, mehr bevorzugt zwischen 5 und 20 Gew.-% Ruß und äußerst bevorzugt zwischen 8 und 15 Gew.-% Ruß. Der Ruß hat eine Licht-absorbierende Funktion.
In einer bevorzugten Ausführung werden Rußpulver der Firma Degussa eingesetzt. Diese sind unter dem Handelsnamen Printex™ kommerziell erhältlich. Zur besseren Dispergierbarkeit in die Primermatrix werden besonders bevorzugt oxidativ nachbehandelte Ruße eingesetzt. Weiterhin kann es für den Primer (c) von Vorteil sein, wenn neben Ruß Farbpigmente hinzugesetzt werden. So eignen sich als Zusätze z.B. Blaupigmente, wie z.B. Anilinschwarz BS890 der Firma Degussa. Weiterhin lassen sich als Zusätze noch Mattierungsmittel einsetzen.

Für die Qualität der Einfärbung ist weiterhin eine homogene Verteilung der Farbpartikel in der Primermatrix sehr vorteilhaft. Hierfür sollte ein intensiver Mischprozess eingesetzt werden, der in einer optimalen Variante eine Vermischung mit dem Ultraturrax (Hochleistungshomogenisator) beinhaltet. Mit diesem Schritt können die Farbpartikel nochmals aufgeschlossen und in der Primermatrix homogenisiert werden.

Haftklebemassen (b) und (b')

Die Haftklebemassen (b) und (b') sind in einer bevorzugten Ausführungsform auf beiden Seiten des Haftklebebandes identisch. Es kann aber in einer speziellen Ausführungsform auch von Vorteil sein, wenn sich die Haftklebemassen (b) und (b') voneinander unterscheiden, insbesondere durch ihre Schichtdicke und/oder ihre chemische Zusammensetzung. So lassen sich auf diesem Weg z.B. unterschiedliche haftklebrige Eigenschaften einstellen. Als Haftklebemassensysteme für das erfinderische doppelseitigen Haftklebeband werden bevorzugt Acrylat-, Naturkautschuk-, Synthesekautschuk-, Silikon- oder EVA-Kleber eingesetzt. Die Haftklebemassen (b) und (b') sind erfindungsgemäß beide weiß eingefärbt.
Weiterhin lassen sich auch die weiteren, dem Fachmann bekannten Haftklebemassen verarbeiten, wie sie z.B im "Handbook of Pressure Sensitive Adhesive Technology" von Donatas Satas (van Nostrand, New York 1989) aufgeführt sind.

Für Naturkautschukklebemassen wird der Naturkautschuk bevorzugt bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.
Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfinderisch bevorzugten Ausführungsform werden bevorzugt (Meth)acrylathaftklebemassen eingesetzt.

Erfindungsgemäß eingesetzte (Meth)Acrylathaftklebemassen, welche durch radikalische Polymerisation erhältlich sind, bestehen bevorzugt zu mindestens 50 Gew.-% auf zumindest einem acrylischen Monomer aus der Gruppe der Verbindungen der folgenden allgemeinen Formel:

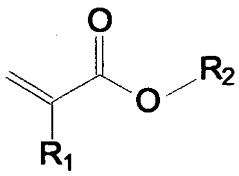

Dabei ist der Rest $R_1$ = H oder $CH_3$; und der Rest $R_2$ = H oder $CH_3$ oder wird gewählt aus der Gruppe beinhaltend die verzweigten und unverzweigten, gesättigten Alkylgruppen mit 1 - 30 Kohlenstoffatomen.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Ausführungsform wird die Comonomerzusammensetzung derart gewählt, dass sich die Haftklebemassen als hitzeaktivierbare Haftklebemassen einsetzen lassen.

Die Polymere lassen sich bevorzugt durch Polymerisation einer Monomermischung gewinnen, welche sich aus Acrylsäureestern und/oder Methacrylsäureestern und/oder deren freien Säuren mit der Formel $CH_2 = CH(R_1)(COOR_2)$ zusammensetzt, wobei $R_1$ = H oder $CH_3$ und $R_2$ eine Alkylkette mit 1 - 20 C-Atomen oder H ist.

Die Molmassen $M_w$ (Gewichtsmittel) der eingesetzten Polyacrylat betragen bevorzugt $M_w \geq 200.000$ g/mol.

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindest 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer vorteilhaften Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylacrylamid, N, N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend zu verstehen ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend zu verstehen ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer vorteilhaften Vorgehensweise Photoinitiatoren mit einer copolymerisierbaren Doppelbindung eingesetzt. Als Photoinitiatoren sind Norrish-I- und Norrisch-II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend zu verstehen ist.

Durch die Erhöhung des aromatischen Anteils steigt der Brechungsindex der Haftklebemasse an und die Streuung zwischen LCD-Glas und Haftklebemasse durch z.B. Fremdlicht wird minimiert.

Zur Weiterentwicklung können den Haftklebemassen Harze beigemischt sein. Als zuzusetzende klebrigmachende Harze sind die vorbekannten und in der Literatur beschriebenen Klebharze einsetzbar. Genannt seien stellvertretend die Pinen-, Inden-und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Auch hier werden zur Verbesserung der Transparenz bevorzugt transparente und sehr gut mit dem Polymer verträgliche Harze eingesetzt. Hydrierte oder teilhydrierte Harze weisen häufig diese Eigenschaften auf.

Zur Erzielung der Weißfärbung der Klebemasse werden weiße farbtragende Partikel beigemischt.

In einer sehr zu bevorzugenden erfinderischen Variante werden als farbtragende Partikel Titandioxid oder Bariumsulfat der Haftklebemasse zugemischt. Durch diese Additivierung wird bei sehr hohem Additivierungsgehalt (>10 Gew.-%), neben der Lichtabsortion, zusätzlich eine Lichtreflektion erzielt. Für die optimale Einfärbung der Haftklebemassenschichten (b) und (b') ist die Partikelgrößenverteilung der weißen Farbpigmente von großer Bedeutung. So sollten die Partikel zumindest kleiner als die Gesamtschichtdicke der Haftklebemassenschichten (b) und (b') sein. In einer bevorzugten Variante werden Partikel mit einem durchschnittlichen Durchmesser von 50 nm bis 5 $\mu$m, mehr bevorzugt zwischen 100 nm und 3 $\mu$m, äußerst bevorzugt zwischen 200 nm und 1 $\mu$m eingesetzt. Solche Qualitäten lassen sich z.B. durch gezielte Vermahlung in Kugelmühlen mit anschließender gezielter Siebung erzielen. Für die Qualität der Einfärbung ist weiterhin eine homogene Verteilung der Farbpartikel in der Haftklebemassenmatrix erforderlich. Hierfür muss ein intensiver Mischprozess eingesetzt werden, der in einer optimalen Variante eine Vermischung mit dem Ultraturrax beinhaltet. Mit diesem Schritt können dann noch einmal die Farbpartikel aufgeschlossen und in der Haftklebemassenmatrix homogenisiert werden.

Weiterhin können optional Weichmacher (Plastifizierungsmittel), weitere Füllstoffe (wie. z.B. Fasern, Zinkoxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein.

Zu einer optionalen Vernetzung mit UV-Licht können den Haftklebemassen UVabsorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

**Herstellverfahren für die Acrylathaftklebemassen**

Zur Polymerisation werden die Monomere dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.
Zur Erzielung einer für Haftklebemassen bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, dass sich nach der Gleichung (G1) in Analogie zur ***Fox***-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \textbf{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cydohexanonperoxid, Di-t-butylperoxid, Azodüsosäurebutyronitril, Cyclohexylsulfonylacetylperoxid, Diisopropylpercarbonat, t-Butylperoktoat, Benzpinacol. In einer sehr bevorzugten Ausführungsform wird als radikalischer Initiator 1,1'-Azo-bis-(cyclohexancarbonsäurenitril) (Vazo 88™ der Fa. DuPont) oder Azodisobutyronitril (AIBN) verwendet.

Die gewichtsmittleren Molekulargewichte $M_w$ der bei der radikalischen Polymerisation entstehenden Haftklebemassen werden sehr bevorzugt derart gewählt, dass sie in einem Bereich von 200.000 bis 4.000.000 g/mol liegen; speziell für die weitere Verwendung als elektrisch-leitfähiger Schmelzhaftkleber mit Rückstellvermögen werden Haftklebemassen mit mittleren Molekulargewichten $M_w$ von 400.000 bis 1.400.000 g/mol hergestellt. Die Bestimmung des mittleren Molekulargewichtes erfolgt über Größenausschlußchromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die (Meth)acrylathaftklebemassen in Substanz zu polymerisieren. Hier eignet sich insbesondere die Präpolymerisationstechnik. Die Polymerisation wird mit UV-Licht iniitiert, aber nur zu einem geringen Umsatz ca. 10 - 30 % geführt. Anschließend kann dieser Polymersirup z.B. in Folien eingeschweißt werden (im einfachsten Fall Eiswürfel) und dann in Wasser zu hohem Umsatz durchpolymerisiert. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur $P_L(A)$-Me repräsentiert, wobei Me ein Metall der Gruppe I, wie z.B. Lithium, Natrium oder Kalium, und $P_L(A)$ ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

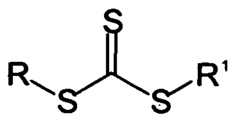

(I)

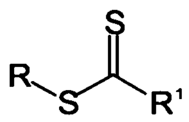

(II)

worin R und $R^1$ unabhängig voneinander gewählt oder gleich sind und

- verzweigte und unverzweigte $C_1$- bis $C_{18}$-Alkylreste, $C_3$- bis $C_{18}$-Alkenylreste; $C_3$-bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl. Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.
Als $C_3$-$C_{12}$-Cycloalkylreste dienen beispielsweise Cyclopropyl, Cyclopentyl, Cyclohexyl oder TrimethylcyGohexyl.
Als $C_6$-$C_{18}$-Arylreste dienen beispielsweise Phenyl, Naphthyl, Benzyl, 4-tert.-Butylbenzyl-oder weitere substituierte Phenyl, wie z.B. Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

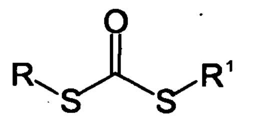
(III)

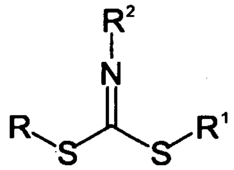
(IV)

wobei $R^2$ ebenfalls unabhängig von R und $R^1$ aus der oben aufgeführten Gruppe für diese Reste gewählt werden kann.
Beim konventionellen .RAFT-Prozess' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.
Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

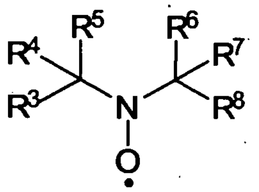
(Va)

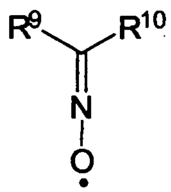
(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,

iii) Ester -$COOR^{11}$, Alkoxide -$OR^{12}$ und/oder Phosphonate -$PO(OR^{13})_2$, wobei $R^{11}$, $R^{12}$ oder $R^{13}$ für Reste aus der Gruppe ii) stehen.

Verbindungen der Formeln (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.
Mehr bevorzugt werden kontrollierte Regler für die Polymerisation von Verbindungen des Typs eingesetzt:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode lässt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Beschichtungsverfahren, Ausrüstung des Trägermaterials

Zur Herstellung wird in einer bevorzugten Ausführungsform die Haftklebemasse aus Lösung auf das Trägermaterial beschichtet. Zur Steigerung der Verankerung der Haftklebemasse kann optional die Schicht (a) vorbehandelt werden. So kann z.B. mit Corona oder mit Plasma vorbehandelt werden.
Für die Beschichtung der Haftklebemasse aus Lösung wird über Wärmezufuhr z.B. in einem Trockenkanal das Lösemittel entfernt und gegebenenfalls die Vernetzungsreaktion initiiert.

Die oben beschriebenen Polymere können weiterhin auch als Hotmelt-Systeme (also aus der Schmelze) beschichtet werden. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann

gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

Zur Beschichtung als Hotmelt können unterschiedliche Beschichtungsverfahren herangezogen werden. In einer vorteilhaften Ausführung werden die Haftklebemassen über ein Walzenbeschichtungsverfahren beschichtet. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung wird über eine Schmelzdüse beschichtet. In einem weiteren bevorzugten Verfahren wird durch Extrusion beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals.
Durch die Beschichtung können die Haftklebemassen auch eine Orientierung erfahren.

Weiterhin kann es erforderlich sein, dass die Haftklebemassen vernetzt werden. In einer bevorzugten Ausführung wird thermisch, mit Elektronen- und/oder UV-Strahlung vernetzt.

Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepasst.

Weiterhin werden die Haftklebemassen in einer vorteilhaften Ausführungsform der Erfindung mit Elektronenstrahlen vernetzt. Typische Bestrahlungsvorrichtungen, die vorteilhaft eingesetzt werden, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 und 150 kGy, insbesondere zwischen 20 und 100 kGy.
Es können auch beide Vernetzungsverfahren angewendet werden oder andere Verfahren, die hochenergetische Bestrahlung ermöglichen.

Weiterhin ist Gegenstand der Erfindung die Verwendung der erfinderischen doppelseitigen Haftklebebänder zur Verklebung oder Herstellung von LC-Displays. Für die Verwendung als Haftklebeband können die doppelseitigen Haftklebebänder mit einem oder zwei Trennfolien oder Trennpapieren abgedeckt sein. In einer bevorzugten Ausführungsform werden silikonisierte oder fluorierte Folien oder Papiere, wie z.B. Glassine, HPDE oder LDPE gecoatete Papiere eingesetzt, die wiederum mit einer Releaseschicht basierend auf Silikonen oder fluorierten Polymeren versehen sind. In einer besonders bevorzugten Ausführungsform werden als Abdeckung silikonisierte PET Folien eingesetzt.
Insbesondere vorteilhaft sind die erfindungsgemäßen Haftklebebänder zur Verklebung von Leuchtdioden (Light Emitting Diode, LED) als Lichtquelle mit dem LCD-Modul geeignet.

**Beispiele**

Die Erfindung wird im Folgenden beschrieben, ohne sich durch die Wahl der Beispiele unnötig beschränken zu wollen.

Folgende Prüfmethoden wurden angewendet.

Prüfmethoden

A. Transmission

Die Transmission wurde im Wellenlängenbereich von 190 bis 900 nm mit einem Uvikon 923 der Fa. Biotek Kontron gemessen. Die Messung wird bei 23°C durchgeführt. Die Absolute Transmission wird als Wert bei 550 nm in % angegeben bezogen auf die vollständige Lichtabsorption (Transmission 0 % = kein Lichtdurchlass; Transmission 100 % = vollständiger Lichtdurchlass).

B. Pinholes

Eine handelsübliche sehr starke Lichtquelle (z.B. Overheadprojektor Typ Liesegangtrainer 400 KC Typ 649, Halogenlampe 36 V, 400 W) wird komplett lichtdicht mit einer Maske abgedeckt. Diese Maske enthält in der Mitte eine kreisrunde Öffnung mit einem Durchmesser von 5 cm. Auf diese kreisrunde Öffnung wird das doppelseitige LCD-Klebeband aufgelegt. In vollständig abgedunkelter Umgebung werden dann die Anzahl der Pinholes elektronisch oder visuell ausgezählt. Diese sind bei eingeschalteter Lichtquelle als durchscheinende Punkte erkennbar.

C. Reflektion

Der Reflektionstest wird nach DIN Norm 5036 Teil 3, DIN 5033 Teil 3 und DIN 5033 Teil 4 durchgeführt. Als Meßgerät wurde eine Ulbrichtsche Kugel Typ LMT (50 cm Durchmesser) eingesetzt in Verbindung mit einem Digitalem Anzeigegerät TYP LMT Taup-Meter. Die integralen Messungen erfolgen mit einer Lichtquelle entsprechend Normlicht A und V(λ)- angepasstem Si-Photoelement. Es wurde gegen eine Glas-Referenzprobe gemessen. Der Reflektionsgrad wird als Summe aus gerichteten und gestreuten Lichtanteilen in % angegeben.

Polymer 1

Ein für radikalische Polymerisationen konventioneller 200 L-Reaktor wurde mit 2400 g Acrylsäure, 64 kg 2-Ethylhexylacrylat, 6,4 kg Methylacrylat und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Bevor die Masse beschichtet wird, wird das Polymer 1 mit Isopropanol auf 30 % Feststoffgehalt verdünnt. Anschließend wird unter kräftigem Rühren 0,3 Gew.-% Aluminium-(III)-acetylacetonat (3-%ige Lösung Isopropanol) bezogen auf das Polymer 1 hinzugemischt. Zur Weißfärbung werden 8 Gewichts-% Titandioxid (< 5 μ, 99,9+, hauptsächlich Rutil Struktur, bezogen auf das Polyacrylat) mit einem Rührer für 1 h intensiv vermischt. Anschließend wird mit einem Ultraturrax das Gemisch noch weiter homogenisiert (für ca. 30 Minuten). Die Haftklebemasse 1 wird unmittelbar danach mit einem 50 μm Filter filtriert und beschichtet.

Polymer 2

Ein für radikalische Polymerisationen konventioneller 200 L-Reaktor wurde mit 2400 g Acrylsäure, 64 kg 2-Ethylhexylacrylat, 6,4 kg Methylacrylat und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Bevor die Masse beschichtet wird, wird das Polymer 1 mit Isopropanol auf 25 % Feststoffgehalt verdünnt. Anschließend wird unter kräftigem Rühren 0,3 Gew.-% Aluminium-(III)-acetylacetonat (3-%ige Lösung Isopropanol) bezogen auf das Polymer 1 hinzugemischt. Zur Weißfärbung werden 12 Gewichts-% Titandioxid (< 5 μ, 99,9+, hauptsächlich Rutil Struktur, bezogen auf das Polyacrylat) mit einem Rührer für 1 h intensiv vermischt. Anschließend wird mit einem Ultraturrax das Gemisch noch weiter homogenisiert (für ca. 30 Minuten). Die Haftklebemasse 1 wird unmittelbar danach mit einem 50 μm Filter filtriert und beschichtet.

Primermasse 1

In einem Fass werden 100 Teile Primer Unisol 11 der Fa. Ichemco mit 10 Teilen eines multifunktionellen Isocyanates Curing Agent D (der Fa. Ichemco) und 8 Gew.-% Ruß (Printex™ 25, Degussa AG) bezogen auf Unisol 11 hinzugemischt. Zur Homogenisierung wird die Lösung für 10 Minuten mit einem Ultratrurrax homogenisiert.

Beispiel 1:

Auf einer 38 μm PET-Folie, extrudiert mit weißen Pigmenten als Füllstoff, der Fa. Toray (Lumirror™ 38E20) wird die Primermasse 1 mit einem Meyer Bar flächig aufgebracht und für 10 Minuten bei 120°C getrocknet. Das Auftragsgewicht beträgt 12 g/m$^2$.

Dann wird auf diese Schicht Polymer 1 aus Lösung flächig aufgebracht und für 10 Minuten bei 100 °C getrocknet. Der Masseauftrag beträgt für diese Schicht 50 g/m$^2$. Die Seite wird mit einer 50 μm dicken und beidseitig silikonisierten PET-Folie abgedeckt. Auf der gegenüberliegenden Seite wird dann das Polymer 1 mit 50 g/m$^2$ flächig aufgebracht, wobei wiederum 10 Minuten bei 100 °C getrocknet wird.

Beispiel 2:

Auf einer 38 μm PET-Folie, extrudiert mit weißen Pigmenten als Füllstoff, der Fa. Toray (Lumirror™ 38E20) wird die Primermasse 1 mit einem Meyer Bar flächig aufgebracht und für 10 Minuten bei 120°C getrocknet. Das Auftragsgewicht beträgt 12 g/$m^2$.
Dann wird auf diese Schicht Polymer 2 aus Lösung flächig aufgebracht und für 10 Minuten bei 100 °C getrocknet. Der Masseauftrag beträgt für diese Schicht 50 g/$m^2$. Die Seite wird mit einer 50 μm dicken und beidseitig silikonisierten PET-Folie abgedeckt. Auf der gegenüberliegenden Seite wird dann das Polymer 2 mit 50 g/$m^2$ flächig aufgebracht, wobei wiederum 10 Minuten bei 100 °C getrocknet wird.

Beispiel 3

Auf einer 12 μm PET-Folie der Serie Hostaphan RNK der Firma Mitsubishi wird die Primermasse 1 mit einem Meyer Bar flächig auf beiden Seiten aufgebracht und für 10 Minuten bei 120°C getrocknet. Das Auftragsgewicht beträgt auf beiden Seiten jeweils 8 g/$m^2$.
Dann wird zunächst auf einer Seite Polymer 1 aus Lösung flächig aufgebracht und für 10 Minuten bei 100 °C getrocknet. Der Masseauftrag beträgt für diese Schicht 50 g/$m^2$. Die Seite wird mit einer 50 μm dicken und beidseitig silikonisierten PET-Folie abgedeckt. Auf der gegenüberliegenden Seite wird dann das Polymer 1 mit 50 g/$m^2$ flächig aufgebracht, wobei wiederum 10 Minuten bei 100 °C getrocknet wird.

Beispiel 4

Auf einer 12 μm PET-Folie der Serie Hostaphan RNK der Firma Mitsubishi wird die Primermasse 1 mit einem Meyer Bar flächig auf beiden Seiten aufgebracht und für 10 Minuten bei 120°C getrocknet. Das Auftragsgewicht beträgt auf beiden Seiten jeweils 8 g/$m^2$.
Dann wird zunächst auf einer Seite Polymer 2 aus Lösung flächig aufgebracht und für 10 Minuten bei 100 °C getrocknet. Der Masseauftrag beträgt für diese Schicht 50 g/$m^2$. Die Seite wird mit einer 50 μm dicken und beidseitig silikonisierten PET-Folie abgedeckt. Auf der gegenüberliegenden Seite wird dann das Polymer 2 mit 50 g/$m^2$ flächig aufgebracht, wobei wiederum 10 Minuten bei 100 °C getrocknet wird.

**Ergebnisse**

Beispiel 1 und 2 sind Beispiele für die erfinderische Variante der Verwendung von nur einer schwarzen Primerschicht. Beispiele 3 und 4 verwenden jeweils doppelseitig einen schwarzen Primer. Beispiel 1 und 2 stellt weiterhin ein Beispiel für die Verwendung einer weiß eingefärbten Folie dar. Beispiele 3 und 4 verwenden transparente und sehr flexible Folien. Die Beispiel 1 bis 4 wurden nach den Prüfmethoden A, B und C ausgetestet. Die Ergebnisse sind in Tabelle 1 dargestellt.

Tabelle 1

| Beispiel | Transmission (Test A) | Pinholes (Test B) | Reflektion (total) (Test C) |
|---|---|---|---|
| Beispiel 1 | < 0,1 % | 0 | 76,2 % |
| Beispiel 2 | < 0,1 % | 0 | 77,3 % |
| Beispiel 3 | < 0,1 % | 0 | 73,5 % |
| Beispiel 4 | < 0,1 % | 0 | 74,1 % |

Den Ergebnissen aus Tabelle 1 kann entnommen werden, dass die Beispiele 1 bis 4 im Hinblick auf optische Fehlstellen (Pinhole-Freiheit) und Transmission hervorragende Eigenschaften aufweisen. Weiterhin konnte mit Test C gezeigt werden, dass die Beispiele 1 bis 4 nicht nur lichtabsorbierende Eigenschaften aufweisen, sondern auch sehr hohe lichtreflektierende Eigenschaften besitzen, trotz der darunter liegenden schwarzen Primerschicht. Diese bewirkt des weiteren, dass für ein weißes doppelseitiges Klebeband extrem hohe Lichtabsorbtionswerte gemessen werden können. Für den Anwendungsfall im LCD bedeutet dies, dass die Lichtausbeute im Lichtkanal deutlich erhöht wird. Weiterhin konnte gezeigt werden, dass für die Herstellung eines lichtreflektierenden und lichtabsorbierenden Tapes nicht unbedingt ein doppelseitiges Haftklebeband eingesetzt werden muss, welches auf einer Seite schwarz und auf

der anderen Seite Lichtreflektierend (also weiß oder metallisch) sein muss.

## Patentansprüche

1. Haftklebeband zur Herstellung oder Verklebung von optischen Flüssigkristall-Datenanzeigen (LCDs), mit lichtreflektierenden und lichtabsorbierenden Eigenschaften, mit einer Ober- und einer Unterseite, weiterhin mit einer Trägerfolie (a), die ihrerseits eine Ober- und eine Unterseite hat, wobei das Haftklebeband beidseitig mit einer Haftklebeschicht (b, b') ausgerüstet ist, wobei zumindest zwischen der Haftklebeschicht (b') auf der Unterseite des Haftklebebandes und der Trägerfolie (a) eine dunkle Primerschicht (c) vorgesehen ist, **dadurch gekennzeichnet, dass**
die Haftklebeschichten (b, b') auf beiden Seiten des Haftklebebandes weiß eingefärbt sind.

2. Haftklebeband nach Anspruch 1, **dadurch gekennzeichnet, dass**
auch zwischen der Haftklebeschicht (b) auf der Oberseite des Haftklebebandes und der Trägerfolie (a) eine dunkle Primerschicht (c) vorgesehen ist.

3. Haftklebeband nach zumindest einem der vorangehenden Ansprüche, **dadurch gekennzeichnet, dass**
die Trägerfolie (a) transparent ist.

4. Haftklebeband nach zumindest einem der vorangehenden Ansprüche, **dadurch gekennzeichnet, dass**
die eine und/oder beide Primerschichten (c) schwarz eingefärbt sind, insbesondere durch Ruß, ganz besonders durch Pigmentruß.

5. Verwendung eines Haftklebebandes nach einem der vorangehenden Ansprüche zur Herstellung oder zur Verklebung von optischen Flüssigkristall-Datenanzeigen.

6. Verwendung nach Anspruch 5 zur Verklebung von LCD-Gläsern.

7. Flüssigkristall-Datenanzeige-Gerät aufweisend ein Haftklebeband nach zumindest einem der Ansprüche 1 bis 4.

## Claims

1. Pressure-sensitive adhesive tape for the production or adhesive bonding of optical liquid-crystal data displays (LCDs), having light-reflecting and light-absorbing properties, having a top side and a bottom side, and also having a carrier film (a), which in turn has a top side and a bottom side, the pressure-sensitive adhesive tape being equipped on both sides with a pressure-sensitive adhesive layer (b, b'), at least between the pressure-sensitive adhesive layer (b') on the bottom side of the pressure-sensitive adhesive tape and the carrier film (a), there being a dark primer layer (c), **characterized in that** the pressure-sensitive adhesive layers (b, b') on both sides of the pressure-sensitive adhesive tape are colored white.

2. Pressure-sensitive adhesive tape according to Claim 1, **characterized in that** there is also a dark primer layer (c) between the pressure-sensitive adhesive layer (b) on the top side of the pressure-sensitive adhesive tape and the carrier film (a).

3. Pressure-sensitive adhesive tape according to at least one of the preceding claims, **characterized in that** the carrier film (a) is transparent.

4. Pressure-sensitive adhesive tape according to at least one of the preceding claims, **characterized in that** one and/or both primer layers (c) are colored black, more particularly by carbon black, especially by pigment black.

5. Use of a pressure-sensitive adhesive tape according to any one of the preceding claims for the production or adhesive bonding of optical liquid-crystal data displays.

6. Use according to Claim 5 for the adhesive bonding of LCD glasses.

7. Liquid-crystal data display device comprising a pressure-sensitive adhesive tape according to at least one of Claims

1 to 4.

## Revendications

1. Bande autoadhésive pour la réalisation ou le collage d'affichages optiques à cristaux liquides (LCD), avec des propriétés de réflexion et d'absorption de la lumière, présentant une face supérieure et une face inférieure, présentant en outre une feuille support (a), qui présente à son tour une face supérieure et une face inférieure, la bande autoadhésive étant apprêtée des deux côtés avec une couche autoadhésive (b, b'), où on a prévu, au moins entre la couche autoadhésive (b'), sur la face inférieure de la bande autoadhésive, et la feuille support (a) une couche d'apprêt foncée (c), **caractérisée en ce que** les couches autoadhésives (b, b') sont teintées en blanc des deux côtés de la bande autoadhésive.

2. Bande autoadhésive selon la revendication 1, **caractérisée en ce qu'**on a également prévu une couche d'apprêt foncée (c) entre la couche autoadhésive (b) sur la face supérieure de la bande autoadhésive et la feuille support (a).

3. Bande autoadhésive selon au moins l'une quelconque des revendications précédentes, **caractérisée en ce que** la feuille support (a) est transparente.

4. Bande autoadhésive selon au moins l'une quelconque des revendications précédentes, **caractérisée en ce qu'**une et/ou les deux couches d'apprêt (c) sont teintées en noir, en particulier par de la suie, tout particulièrement par de la suie pigmentaire.

5. Utilisation d'une bande autoadhésive selon l'une quelconque des revendications précédentes pour la réalisation ou pour le collage d'affichages optiques à cristaux liquides.

6. Utilisation selon la revendication 5 pour le collage d'écrans LCD.

7. Appareil d'affichage à cristaux liquides présentant une bande autoadhésive selon au moins l'une quelconque des revendications 1 à 4.

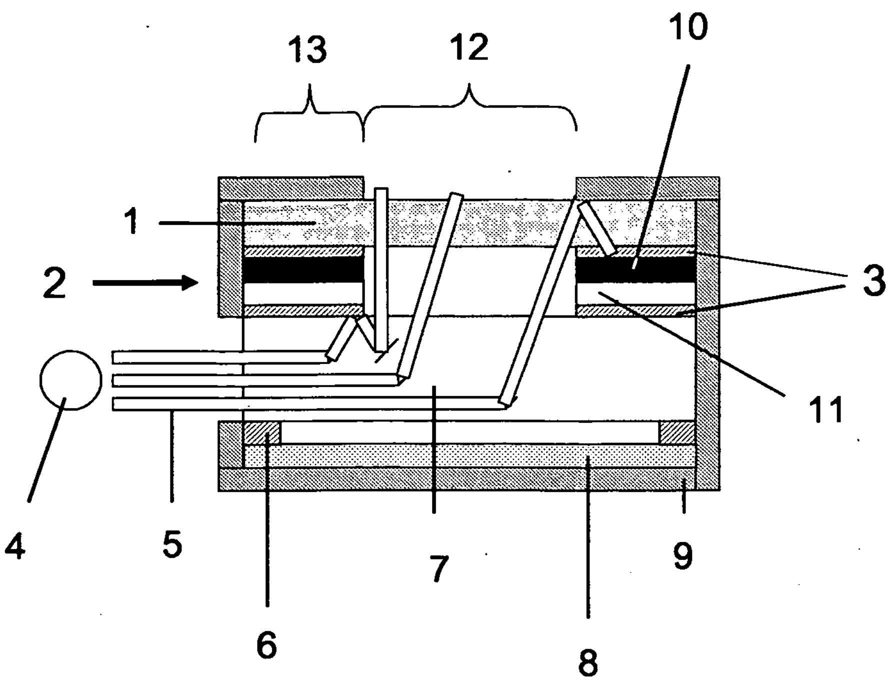


Fig 1

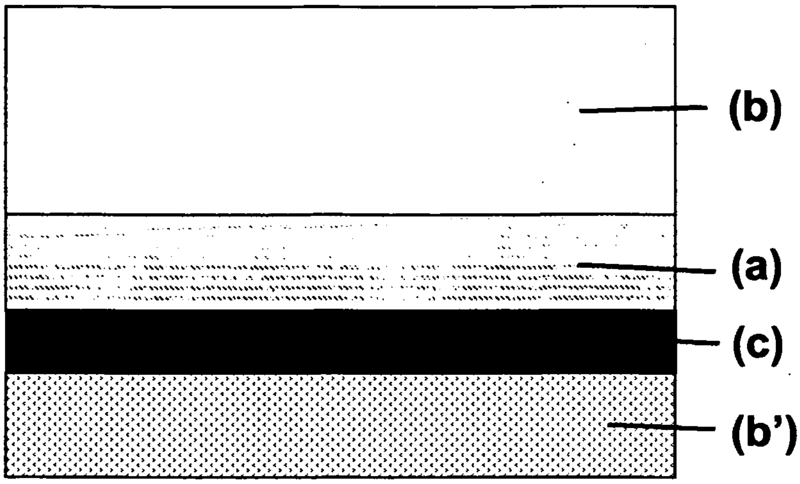


Fig 2

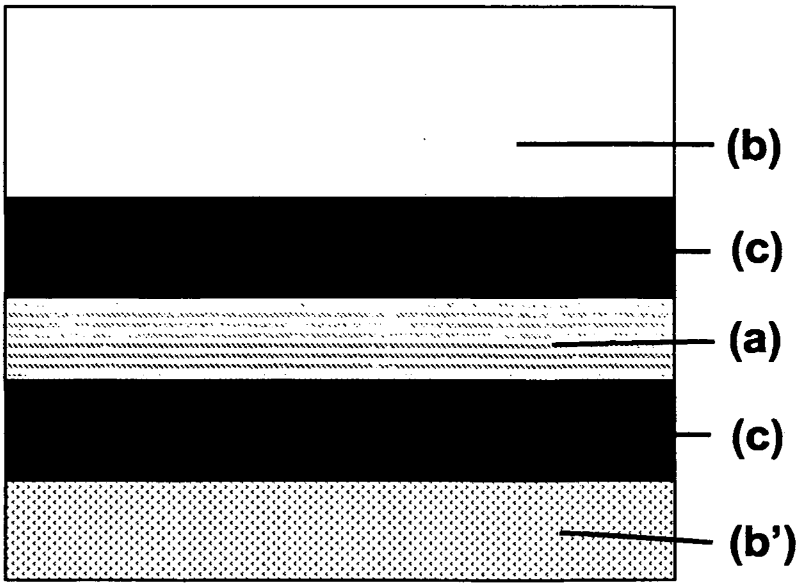


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2002350612 A
- DE 10243215
- US 2004076768 A
- WO 2005019367 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **Donatas Satas.** Handbook of Pressure Sensitive Adhesive Technology. van Nostrand, 1989
- **Fouassier.** Photoinititation, Photopolymerization and Photocuring: Fundamentals and Applications. Hanser-Verlag, 1995
- **Carroy et al.** Chemistry and Technology of UV and EB Formulation for Coatings, Inks and Paints. SITA, 1994
- **T.G. Fox.** *Bull. Am. Phys. Soc.,* 1956, vol. 1, 123
- **Houben Weyl.** *Methoden der Organischen Chemie,* vol. E 19a, 60-147
- **Hawker.** Beitrag zur Hauptversammlung. American Chemical Society, 1997
- **Husemann.** *Beitrag zum IUPAC World-Polymer Meeting,* 1998
- Electron Beam Processing, in Chemistry and Technology of UV and EB formulation for Coatings. **Skelhorne.** Inks and Paints. SITA, 1991, vol. 1